# EUROPÄISCHE PATENTSCHRIFT

(11) **EP 3 361 621 B1**
(45) Veröffentlichungstag und Bekanntmachung des Hinweises auf die Patenterteilung: **07.05.2025**
(21) Anmeldenummer: 17207490.8
(22) Anmeldetag: 14.12.2017
(51) Int. Cl.: H02P 3/12, E05F 15/603, H02P 29/024

(54) **BREMSVORRICHTUNG**
BRAKING DEVICE
DISPOSITIF DE FREINAGE

(30) Priorität: 08.02.2017 DE 102017201944
(43) Veröffentlichungstag der Anmeldung: 15.08.2018
(73) Patentinhaber: GEZE GmbH, 71229 Leonberg (DE)
(72) Erfinder: Hucker, Matthias, 76359 Marxzell (DE); Jansen, André Sebastiaan Maria, 6045BB Roermond (NL)
(74) Vertreter: Witte, Weller & Partner Patentanwälte mbB

(56) Entgegenhaltungen:
- WO-A1-2016/113031
- DE-A1- 102007 062 515
- DE-B3- 102015 200 284
- US-A- 5 341 077
- US-A1- 2010 236 281
- US-A1- 2011 185 941
- US-A1- 2012 299 520
- US-A1- 2015 303 839
- US-B1- 6 194 856

## Beschreibung

Die vorliegende Erfindung betrifft eine Bremsvorrichtung für einen beweglichen Türflügel.

Aus dem Stand der Technik sind Türschließer für bewegliche Türflügel mit einem mechanischen Energiespeicher und einer Bremsvorrichtung bekannt. Beim Öffnen des Türflügels wird der mechanische Energiespeicher mit potentieller Energie aufgeladen, welche den losgelassenen Türflügel wieder schließt. Der mechanische Energiespeicher ist beispielsweise als Feder ausgeführt, welche durch das Öffnen des Türflügels gespannt wird. Danach schließt die potentielle Energie in der Feder den Türflügel. Das Schließmoment des Türflügels ist dabei durch die aktuelle Federspannung und die verschiedenen Übersetzungen im System bestimmt. Die Schließgeschwindigkeit selbst wird in der Bremsvorrichtung beispielsweise durch Öl in einem Dämpfer gedämpft. Durch verschiedene hydraulische Ventile und deren Einstellung kann das gewünschte Schließverhalten des Türflügels eingestellt werden. Dies ermöglicht eine kostengünstige und autarke Implementierung des Türschließers, d.h. der Türschließer funktioniert ohne Zuführung von externer Energie.

Allerdings ist die Schließgeschwindigkeit des Türflügels mit Ventilen nur in Grenzen einstellbar. So hat beispielsweise eine Endschlagfunktion immer denselben Einsatzpunkt, da nur der Durchfluss, aber nicht die Position des Ventils einstellbar ist. Des Weiteren können Funktionen, welche von der aktuellen Geschwindigkeit des Türflügels abhängen, nur aufwändig realisiert werden. Auch gestaltet sich die Regelung der Schließgeschwindigkeit, beispielsweise auf eine gewünschte Schließzeit des Türflügels, schwierig. Durch Probieren müssen die Ventile entsprechend eingestellt werden. Ändern sich dann die Temperatur des Dämpferöls oder die Reibungsverhältnisse im Türschließer, so ändert sich auch die Schließzeit. Zudem kann es durch austretendes Dämpferöl zu Verschmutzungen der Umwelt kommen, falls der Türschließer undicht wird, und das Dämpferöl muss dann entsorgt werden. Außerdem ist das Dämpferöl in der Regel brennbar, was zur Ausbreitung eines Brandes beitragen kann, wenn es im Brandfall austritt und sich entzündet.

Um solche Nachteile zu vermeiden, kann die Bremsvorrichtung einen als Generator betriebenen Elektromotor, dessen Motorwelle durch eine Bewegung des Türflügels drehbar ist und der eine bewegungsabhängige Motorspannung ausgibt, sowie einen Bremsstromkreis umfassen, an den die Motorspannung angelegt oder anlegbar ist und über den der Elektromotor kurzschließbar ist, um eine Bewegung des Türflügels zu dämpfen. Die Dämpfung erfolgt dabei also nicht dadurch, dass ein Dämpferöl durch Ventile gedrängt wird, sondern dadurch, dass der als Generator betriebene Elektromotor elektrische Energie erzeugt, die durch das Kurzschließen verbraucht wird. Eine derartige Bremsvorrichtung kann auch bei einem nicht elektrisch betriebenen Türschließer vorgesehen sein, da für den Betrieb der Bremsvorrichtung grundsätzlich keine Stromquelle erforderlich ist. Somit ermöglicht auch eine Bremsvorrichtung mit generatorisch betriebenem, kurzschließbarem Elektromotor eine autarke Implementierung des Türschließers. Je nach Ausführung kann die Bremsvorrichtung, insbesondere der genannte Bremsstromkreis, aber auch Schaltelemente aufweisen, zu deren Ansteuerung eine Stromversorgung erforderlich ist. Zudem kann die Bremsvorrichtung in einem elektrischen Türantrieb vorgesehen sein, wobei der Elektromotor dann neben seiner Funktion als Generator der Bremsvorrichtung zugleich auch als Motor des Türantriebs dienen kann, wofür er dann mit Strom versorgt werden muss.

Aus der DE 10 2005 028 007 B4 ist ein Türantrieb zum Betätigen eines beweglichen Türflügels mit einer solchen Bremsvorrichtung bekannt. Der Bremsstromkreis dieser Bremsvorrichtung weist ein als Feldeffekttransistor ausgeführtes Schaltelement auf, über welches die Motorklemmen des Elektromotors kurzschließbar sind. Im Bremsstromkreis ist eine Drain-Source-Strecke des Feldeffekttransistors angeordnet, und eine Spannung zwischen Gate und Source des Feldeffekttransistors wird über ein Potentiometer eingestellt, welches in Parallelschaltung mit der Drain-Source-Strecke des Feldeffekttransistors angeordnet ist. Ein Spannungsabgriff des Potentiometers ist an den Gate-Anschluss des Feldeffekttransistors angeschlossen. Somit wird der Feldeffekttransistor als spannungsabhängiger Lastwiderstand für den Elektromotor betrieben, so dass die Bremskraft der Bremsvorrichtung von der Ausgangsspannung des als Generator betriebenen Elektromotors abhängig ist und zudem über das Potentiometer einstellbar ist.

Eine ähnliche Bremsvorrichtung ist aus der DE 10 2015 200 284 B3 bekannt. Diese Bremsvorrichtung weist eine Auswerte- und Steuereinheit auf, die über ein Schaltelement im Bremsstromkreis eine Pulsweitenmodulation des Motorstroms durchführt und auf diese Weise eine wirksame Bremskraft zur Dämpfung der Bewegung des Türflügels einstellt. Auf diese Weise lässt sich das gewünschte Schließverhalten besonders flexibel einstellen. Denn die von der Auswerte- und Steuereinheit verursachte Pulsweitenmodulation des Motorstroms kann auf vielfältige Weise vorgebbar und insbesondere auch von über Sensoren erfassbaren Zuständen, z.B. der aktuellen Schließgeschwindigkeit oder der Winkelposition des Türflügels, abhängig sein, so dass auch eine Regelung der Schließgeschwindigkeit zur Erzielung eines gewünschten Schließverhaltens möglich wird.

Die Bremsvorrichtung ist dabei in der Regel im Hinblick auf eine sachgerechte Benutzung des jeweiligen Türflügels ausgelegt, z.B. im Hinblick auf Kräfte, wie sie für ein normales Öffnen bzw. Schließen des Türflügels erforderlich sind, und/oder bei Verwendung mit einem Türschließer im Hinblick auf dessen Federkraft. Allerdings kann es vorkommen, dass auch größere Kräfte auf den Türflügel ausgeübt werden, beispielsweise durch Wind, durch Vandalismus oder dadurch, dass Kinder mit dem Türflügel spielen. Derartige mögliche zusätzliche Krafteinwirkungen belasten dabei nicht nur die Mechanik eines jeweiligen Türschließers oder Türantriebs, sondern können auch die die jeweilige Bremsvorrichtung beeinträchtigen.

Bei hydraulisch gedämpften Türschließern können als Schutz vor einer Beschädigung Hydraulikventile in den Hydraulikkreislauf eingebaut sein, die im Falle einer Überbelastung öffnen und dadurch die Bewegung des Türflügels freigeben. Bremsvorrichtungen, bei denen die Dämpfung der Bewegung des Türflügels auf dem Kurzschließen eines generatorisch betriebenen Elektromotors beruht, können nicht durch einfache Ventile geschützt werden, und sind daher dem Risiko einer Beschädigung durch Überbelastung ausgesetzt. Denn bei einer übermäßigen Krafteinwirkung auf den Türflügel, die zu einer hohen Geschwindigkeit des Türflügels führt, kann am generatorisch betriebenen Elektromotor der Bremsvorrichtung eine hohe Motorspannung entstehen, so dass beim Kurzschließen des Elektromotors entsprechend hohe Ströme fließen. Die hohen Spannungen und/oder Ströme aber können Komponenten der Bremsvorrichtung zerstören, so dass die Bremsvorrichtung funktionsunfähig werden kann. Zudem wird durch übermäßige Krafteinwirkung bei gleichzeitiger Dämpfung die Mechanik zwischen der Bremsvorrichtung und dem Türflügel stark beansprucht, was ebenfalls zu Beschädigungen führen kann.

Eine Bremsvorrichtung mit den Merkmalen des Oberbegriffs des Anspruchs 1 ist aus US 2011/0185941 A1 bekannt.

Es ist eine Aufgabe der Erfindung eine Bremsvorrichtung der genannten Art bereitzustellen, die eine verbesserte Sicherheit gegen Überbelastung aufweist.

Die Aufgabe wird gelöst durch eine Bremsvorrichtung mit den Merkmalen des Anspruchs 1. Vorteilhafte Ausführungsformen der Erfindung ergeben sich aus den Unteransprüchen, der vorliegenden Beschreibung sowie den Zeichnungen.

Die erfindungsgemäße Bremsvorrichtung umfasst eine Schutzvorrichtung mit einem Stromsensor, der dazu ausgebildet ist, eine von dem Elektromotor erzeugte Stromstärke zu erfassen. Dabei ist die Schutzvorrichtung dazu ausgebildet, den Bremsstromkreis in Abhängigkeit von der erfassten Stromstärke derart zu modifizieren, dass bei einem Erreichen oder Überschreiten einer vorgegebenen oder vorgebbaren Überlaststromstärke die Stromstärke in dem Bremsstromkreis reduziert wird.

Die Schutzvorrichtung kann die übrige Bremsvorrichtung somit insbesondere vor zu hohen Stromstärken in dem Bremsstromkreis schützen. Dadurch kann zugleich auch der Elektromotor vor zu hohen Stromstärken bei einem Kurzschluss über den Bremsstromkreis geschützt werden. Die Schutzvorrichtung greift dafür derart in den Bremsstromkreis ein, dass die Stromstärke in dem Bremsstromkreis reduziert wird. Dadurch wird insbesondere auch die auf den Türflügel wirkende Dämpfung reduziert, so dass die Bewegung des Türflügels bei übermäßiger Krafteinwirkung in ähnlicher Weise wie bei einem Überlastventil eines hydraulischen Türschließers freigegeben wird oder aber dass die Dämpfung des Türflügels zumindest soweit nachgibt, dass die Belastung der Bremsvorrichtung ein verträgliches Maß nicht überschreitet.

Das Reduzieren der Dämpfung schützt dabei nicht nur die Bremsvorrichtung selbst, sondern auch die Mechanik zwischen der Bremsvorrichtung und dem Türflügel, beispielsweise das Motorgetriebe eines Türschließers oder eines Türantriebs, als Teil dessen die Bremsvorrichtung vorgesehen ist. Daher muss das Eingreifen der Schutzvorrichtung auch nicht zwangsläufig im Hinblick darauf ausgelegt sein, dass eine Beschädigung der Bremsvorrichtung vermieden wird. Vielmehr kann ein Eingreifen der Schutzvorrichtung schon dann ausgelöst werden, wenn der Bremsvorrichtung selbst noch keine Überbelastung droht, aber die Mechanik an die Grenzen ihrer Belastbarkeit gelangt.

Als Kriterium dafür, ob ein Eingreifen in den Bremsstromkreis erforderlich ist, wird eine von dem Elektromotor erzeugte Stromstärke herangezogen. Dies kann direkt durch Messung der Stromstärke selbst oder indirekt, z.B. durch Messung einer Spannung, aus der die Stromstärke ableitbar ist, erfolgen, wobei dieses Erfassen der Stromstärke mittels eines Stromsensors der Schutzvorrichtung erfolgt. Der Stromsensor kann dabei grundsätzlich an jeder Stelle der Bremsvorrichtung angeordnet sein, die es ermöglicht, eine Überbelastung zuverlässig festzustellen.

Das Erfassen der Stromstärke muss dabei nicht zwangsläufig an einer Stelle erfolgen, an der die Stromstärke am höchsten ist oder an der eine überhöhte Stromstärke am wahrscheinlichsten zu einer Beschädigung führen würde. Für das Feststellen einer Überbelastung kann es nämlich ausreichen, an einer Stelle eine Stromstärke zu erfassen, die an dieser Stelle möglicherweise unproblematisch ist, die aber den Rückschluss zulässt, dass an anderer Stelle eine Stromstärke vorliegt, die dort eine Überbelastung der Bremsvorrichtung verursacht.

Erfindungsgemäß umfasst der Bremsstromkreis ein mittels einer Auswerte- und Steuereinheit schaltbares Schaltelement, über das der Elektromotor je nach Schaltzustand des Schaltelements kurzgeschlossen ist. Ein solches Schaltelement ermöglicht eine einfache, aber zugleich flexible Steuerung des Kurzschlusses. Das Schalten eines Schaltelements ermöglicht es nicht nur, die Dämpfung im Bedarfsfall einfach einzuschalten und ansonsten auszuschalten. Sondern es ist auch möglich, eine - mittlere - Intensität der Dämpfung einzustellen, insbesondere indem das Schaltelement pulsweitenmoduliert geschaltet wird. Durch Einstellen des Verhältnisses zwischen der Pulsdauer des Kurzschlusses und der Dauer der Unterbrechung des Kurzschlusses kann dabei auf flexible Weise ein gewünschtes Dämpfungsverhalten erzielt werden.

Bei einer solchen Ausführungsform, bei der ein Schaltelement des Bremsstromkreises mittels der Auswerte- und Steuereinheit schaltbar ist, ist ferner der Stromsensor vorteilhafterweise dazu ausgebildet, ein von der erfassten Stromstärke abhängiges Lastsignal an die Auswerte- und Steuereinheit auszugeben. Die Auswerte- und Steuereinheit ist dann dazu ausgebildet ist, das Schaltelement in Abhängigkeit von dem Lastsignal derart zu schalten, dass dadurch die Stromstärke in dem Bremsstromkreis reduziert wird.

Vorzugsweise ist der Stromsensor dazu ausgebildet, die Stromstärke in dem Bremsstromkreis zu erfassen. Das hat beispielsweise den Vorteil, dass am Elektromotor kein Stromsensor vorgesehen werden muss und der Elektromotor somit auch nicht in spezieller Weise ausgebildet zu sein braucht.

Ausgelöst wird das Reduzieren der Stromstärke zumindest dann, wenn die genannte Überlaststromstärke erreicht oder überschritten wird. Diese Überlaststromstärke kann in der Bremsvorrichtung fest vorgegeben sein, da sie für eine jeweilige Bremsvorrichtung durch die in dieser Bremsvorrichtung verwendeten Komponenten und deren jeweilige Belastbarkeit vorab definiert sein kann. Vorteilhafterweise ist die Überlaststromstärke aber zumindest einmalig vorgebbar, so dass sie etwa nach der Montage eines Türschließers oder eines Türantriebs, der die Bremsvorrichtung aufweist, an den jeweiligen Türflügel oder an eine Mechanik des Türschließers oder des Türantriebs angepasst werden kann.

Zum Schutz der Bremsvorrichtung und/oder einer Mechanik am Türflügel vor Überbelastung kann die Dämpfung beispielsweise lediglich derart reduziert werden, dass eine möglichst hohe Dämpfung aufrechterhalten bleibt, bei der gerade noch keine Überbelastung vorliegt. Unter Umständen kann es aber, insbesondere sicherheitshalber, vorzuziehen sein, wenn die Schutzvorrichtung dazu ausgebildet ist, den Bremsstromkreis in Abhängigkeit von der erfassten Stromstärke derart zu modifizieren, dass bei einem Erreichen oder Überschreiten einer vorgegebenen oder vorgebbaren Überlaststromstärke der Stromfluss in dem Bremsstromkreis unterbrochen wird. Durch eine solche Unterbrechung des Stromflusses wird der Kurzschluss über den Bremsstromkreis vollständig aufgehoben, so dass auch die Dämpfung des Türflügels ausgesetzt wird und die Bewegung des Flügels dadurch freigegeben wird.

Der genannte Stromsensor der Sicherungsvorrichtung kann grundsätzlich sehr einfach ausgebildet sein und z.B. einen Shunt-Widerstand oder eine Spule umfassen. Durch eine über ein solches Element erfolgende Strommessung kann jedoch der Stromkreis, in dem die Strommessung erfolgt, beeinflusst werden. Der Stromsensor soll aber vorzugsweise die Stromstärke erfassen, ohne dadurch die übliche Funktionalität des Bremsstromkreises zu verändern. Daher ist der Stromsensor vorzugsweise insofern rückwirkungsfrei ausgebildet, als die Stromstärke in dem Bremsstromkreis durch das Erfassen der Stromstärke mittels des Stromsensors nicht beeinträchtigt wird.

Das kann gemäß einer bevorzugten Ausführungsform dadurch erreicht werden, dass der Stromsensor einen Hall-Sensor umfasst. Insbesondere kann der Stromsensor als Hall-Sensor ausgebildet sein. Eine solche Ausbildung hat den Vorteil, dass die Stromstärke des durch den Hall-Sensor fließenden Stroms über die an dem Hall-Sensor entstehende Hall-Spannung erfasst werden kann, was im Wesentlichen ohne Rückwirkung auf den Stromfluss selbst erfolgen kann. Somit ist eine vergleichsweise einfache rückwirkungsfreie Erfassung der Stromstärke möglich.

Die Auswerte- und Steuereinheit kann insbesondere einen Mikrocontroller umfassen, der von dem Stromsensor das Lastsignal empfangen und das jeweilige Schaltelement des Bremsstromkreises schalten kann. Die Verwendung eines Mikrocontrollers ermöglicht dabei eine besonders variable Festlegung des Zusammenhangs zwischen der jeweils erfassten Stromstärke und der Beeinflussung der Dämpfung in Reaktion auf die erfasste Stromstärke.

Gemäß einer vorteilhaften Weiterbildung ist die Auswerte- und Steuereinheit dazu ausgebildet, das Schaltelement, wenn die dem Lastsignal zugrundliegende erfasste Stromstärke die Überlaststromstärke erreicht oder überschreitet, derart zu schalten, dass der Stromfluss in dem Bremsstromkreis unterbrochen wird. Somit wird die Dämpfung durch die Auswerte- und Steuereinheit also vollständig ausgesetzt, wenn eine Überbelastung droht. Auf diese Weise wird die Bremsvorrichtung und/oder eine Mechanik zwischen der Bremsvorrichtung und dem Türflügel besonders zuverlässig geschützt.

Gemäß einer alternativen Weiterbildung ist die Auswerte- und Steuereinheit dazu ausgebildet, das Schaltelement, wenn die dem Lastsignal zugrundliegende erfasste Stromstärke die Überlaststromstärke erreicht oder überschreitet, derart zu schalten, dass dadurch die Stromstärke in dem Bremsstromkreis, vorzugsweise mittels Pulsweitenmodulation, auf eine Maximalstromstärke, insbesondere auf die Überlaststromstärke, begrenzt wird. Die Dämpfung wird auf diese Weise also nicht vollständig ausgesetzt, sondern lediglich verringert und zwar zumindest so sehr, dass die Stromstärke eine Maximalstromstärke nicht überschreitet. Das kann insbesondere im Sinne einer Regelung erfolgen, so dass die Stromstärke zumindest im Wesentlichen bei der Maximalstromstärke gehalten wird. Das hat den Vorteil, dass die Dämpfung auf einem vergleichsweise hohen Wert gehalten werden kann, aber zugleich die Bremsvorrichtung bzw. die Mechanik zwischen der Bremsvorrichtung und dem Türflügel geschont wird.

Die Maximalstromstärke kann insbesondere der Überlaststromstärke entsprechen. Es kann aber auch vorgesehen sein, dass eine Überlaststromstärke definiert ist, bei deren Erreichen oder Überschreiten die Dämpfung reduziert wird, dass dann aber die Stromstärke auf eine andere, insbesondere geringere, Maximalstromstärke begrenzt wird, so dass zwischen der Maximalstromstärke und der Überlaststromstärke noch eine Art Puffer verbleibt, durch den der Schutz vor einer Überbelastung noch verbessert werden kann.

Insbesondere wenn die Reduzierung bzw. Regelung der Stromstärke mittels einer Pulsweitenmodulation erreicht wird, kann mit der genannten Stromstärke jeweils eine effektive Stromstärke gemeint sein, die als gleitender zeitlicher Mittelwert über die gepulste Stromstärke definiert sein kann.

Gemäß einer weiteren vorteilhaften Ausführungsform ist der Stromsensor dazu ausgebildet, als das genannte Lastsignal einen zu der erfassten Stromstärke proportionalen Wert an die Auswerte- und Steuereinheit auszugeben. Gegenüber der erfassten Stromstärke kann der ausgegebene Wert beispielsweise verstärkt sein. Oder es wird z.B. eine zu der Stromstärke proportionale Spannung ausgegeben. Ein solches Lastsignal kann grundsätzlich kontinuierlich verschiedene Werte annehmen und ist insbesondere analog. Eine Auswertung darüber, ob in Reaktion auf ein jeweiliges von dem Stromsensor ausgegebenes Lastsignal eine Reduzierung der Stromstärke in dem Bremsstromkreis vorgenommen werden soll, kann bei einer solchen Ausführungsform außerhalb des Stromsensors, z.B. in der genannten Auswerte- und Steuereinheit erfolgen.

Dagegen kann gemäß eines alternativen Beispiels vorgesehen sein, dass der Stromsensor dazu ausgebildet ist, die erfasste Stromstärke mit der Überlaststromstärke zu vergleichen und als das genannte Lastsignal ein bestimmtes Überlastsignal auszugeben, wenn die erfasste Stromstärke die Überlaststromstärke erreicht oder überschritten hat, und andernfalls ein bestimmtes Normalsignal auszugeben. Insofern gibt der Stromsensor ein binäres Lastsignal aus, das lediglich zwei unterschiedliche Zustände bzw. Werte, nämlich das Überlastsignal oder das Normalsignal, annehmen kann. Die Überlaststromstärke, bei deren Erreichen oder Überschreiten die Reduzierung der Stromstärke in dem Bremsstromkreis ausgelöst wird, liegt dann vorzugsweise direkt im Stromsensor als Parametrierung vor, so dass im Stromsensor eine Art Auswertung durch Vergleich der erfassten Stromstärke mit der Überlaststromstärke erfolgen kann.

Durch ein solches Beispiel kann grundsätzlich auch auf eine gesonderte Auswerte- und Steuereinheit verzichtet werden, sofern sie für den Bremsstromkreis nicht ohnehin vorgesehen ist. Denn ein Schaltelement des Bremsstromkreises kann beispielsweise direkt über das von dem Stromsensor ausgegebene Lastsignal zwischen einem geschlossenen Zustand, in dem der Bremsstromkreis zum Kurzschließen des Elektromotors geschlossen ist, und einem offenen Zustand, in dem der Kurzschluss über den Bremsstromkreis unterbrochen ist, schaltbar sein. Insofern kann in einem solchen Fall die Auswerte- und Steuereinheit auch als in den Stromsensor integriert angesehen werden.

Gemäß einer solchen weiteren vorteilhaften Ausführungsform ist also vorgesehen, dass der Bremsstromkreis ein schaltbares Schaltelement umfasst, über das der Elektromotor je nach Schaltzustand des Schaltelements kurzgeschlossen ist, und dass der Stromsensor dazu ausgebildet ist, die erfasste Stromstärke mit der Überlaststromstärke zu vergleichen und das Schaltelement in einen offenen Zustand zu schalten, wenn die erfasste Stromstärke die Überlaststromstärke erreicht oder überschritten hat, und das Schaltelement andernfalls in einen geschlossenen Zustand zu schalten.

Vorzugsweise ist die genannte Überlaststromstärke jeweils einstellbar. Beispielsweise kann die Überlaststromstärke dem Stromsensor und/oder der genannten Auswerte- und Steuereinheit als Parametrierung vorgegeben, aber verstellbar sein. Das ermöglicht ein Anpassen dieses Parameters z.B. an verschiedene Ausführungen eines jeweiligen Türschließers oder Türantriebs sowie an verschiedene Anschlagsarten. Besonders komfortabel kann die Überlaststromstärke eingestellt werden, wenn sie funkbasiert, z.B. über NFC, veränderbar ist.

Gemäß einer weiteren vorteilhaften Ausführungsform ist der Elektromotor als bürstenloser Elektromotor mit mehreren Statorspulen ausgebildet, in denen jeweils in Abhängigkeit von der Bewegung des Türflügels eine Wechselspannung induziert wird. Mittels des Stromsensors kann dann beispielsweise direkt die Stromstärke in einer einzelnen Statorspule erfasst werden. Das kann als Kriterium dafür ausreichen, ob eine Überbelastung der Bremsvorrichtung und/oder einer Mechanik zwischen der Bremsvorrichtung und dem Türflügel vorliegt oder nicht. Insbesondere ist es also nicht zwingend erforderlich, die Stromstärke in allen Statorspulen und/oder im Bremsstromkreis zu erfassen.

Bei einer solchen Ausführungsform kann der Elektromotor insbesondere zumindest ein Kontaktpaar aufweisen, an dem er eine der in den Statorspulen induzierten Wechselspannungen ausgibt, während der Bremsstromkreis einen Teilbremsstromkreis umfasst, an den die an dem Kontaktpaar ausgegebene Wechselspannung angelegt oder anlegbar ist und über den das Kontaktpaar kurzschließbar ist. Die Schutzvorrichtung ist dann vorteilhafterweise dazu ausgebildet ist, den Teilbremsstromkreis in Abhängigkeit von der erfassten Stromstärke derart zu modifizieren, dass bei einem Erreichen oder Überschreiten der Überlaststromstärke die Stromstärke in dem Teilbremsstromkreis reduziert wird. Denn wenn für die Dämpfung des Türflügels nicht der Elektromotor als Ganzes über einen einheitlichen Bremsstromkreis kurzgeschlossen wird, sondern einzelne Statorspulen über einen jeweils anderen Teilbremsstromkreis kurzgeschlossen werden, kann es zweckmäßig sein, die Teilbremsstromkreise gesondert vor einer Überbelastung zu schützen.

Wenn der Elektromotor mehrere Kontaktpaare, insbesondere für jede Statorspule jeweils ein Kontaktpaar, aufweist, an denen er jeweils eine andere der in den Statorspulen induzierten Wechselspannungen ausgibt, und der Bremsstromkreis mehrere Teilbremsstromkreise umfasst, an denen jeweils eine andere der an den Kontaktpaaren ausgegebenen Wechselspannungen angelegt oder anlegbar ist und über den das jeweilige Kontaktpaar kurzschließbar ist, ist es ferner bevorzugt, wenn die Schutzvorrichtung dazu ausgebildet ist, die Teilbremsstromkreise in Abhängigkeit von der erfassten Stromstärke derart zu modifizieren, dass bei einem Erreichen oder Überschreiten der Überlaststromstärke die Stromstärke in allen Teilbremsstromkreisen reduziert wird. Denn grundsätzlich ist jeder der Teilbremsstromkreise unabhängig von den jeweils anderen Teilbremsstromkreisen gefährdet, durch eine Überbelastung beschädigt zu werden, so dass es vorteilhaft ist, bei einer erkannten Überbelastung die Stromstärke in allen Teilbremsstromkreisen zu reduzieren.

Bei den vorstehenden Ausführungsformen, bei denen einzelne Statorspulen über jeweilige Teilbremsstromkreise kurzschließbar sind, kann es zwar grundsätzlich ausreichen, die Stromstärke direkt in einer der Statorspulen zu erfassen. Alternativ oder auch zusätzlich dazu, kann die Stromstärke aber auch in zumindest einem Teilbremsstromkreis erfasst werden. Eine besonders umfassende Überwachung auf das Vorliegen einer Überlast kann insbesondere dadurch erreicht werden, dass der Stromsensor dazu ausgebildet ist, die Stromstärke in allen Teilbremsstromkreisen des Bremsstromkreises zu erfassen. Dazu kann an jedem Teilbremsstromkreis ein eigener Einzelstromsensor vorgesehen sein, so dass der genannte Stromsensor als Anordnung mehrerer Einzelstromsensoren ausgebildet ist.

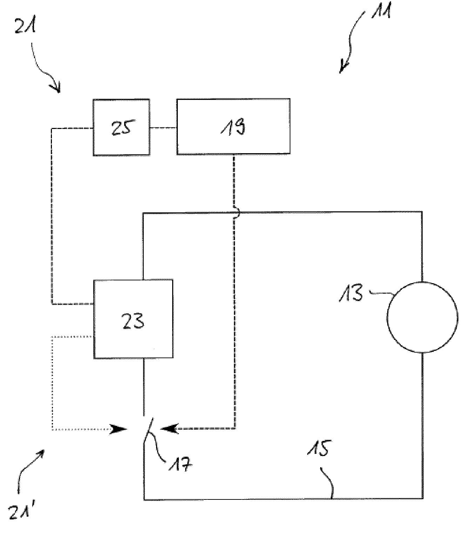

Die Erfindung wird nachfolgen lediglich beispielhaft unter Bezugnahme auf die Figur weiter erläutert.

Die Figur zeigt eine Ausführungsform einer erfindungsgemäßen Bremsvorrichtung 11 in schematischer Darstellung als ein vereinfachtes Schaltbild.

Die Bremsvorrichtung 11 umfasst einen Elektromotor 13, dessen Motorwelle derart mit einem Türflügel gekoppelt ist, dass eine Bewegung des Türflügels zu einer Drehung der Motorwelle führt. Dadurch wird der Elektromotor als Generator betrieben und gibt eine Motorspannung aus.

Die Motorspannung liegt an einem Bremsstromkreis 15 der Bremsvorrichtung 11 an, über den der Elektromotor 13 kurzschließbar ist. Durch ein Kurzschließen des Elektromotors 13 wird dabei elektrische Energie in Wärme umgewandelt, so dass der Bewegung des Türflügels Energie entzogen wird, was zu einer Dämpfung der Bewegung führt. Die Stärke der Dämpfung hängt dabei insbesondere vom Kurzschlussstrom im Bremsstromkreis 15 ab.

Der Kurzschluss wird durch Schließen eines Schaltelements 17 hervorgerufen. Dagegen ist der Stromfluss durch den Bremsstromkreis 15 unterbrochen, wenn das Schaltelement 17 geöffnet ist. Um zumindest einen mittleren Stromfluss im Bremsstromkreis einstellen und somit die Stärke der Dämpfung verändern zu können, ist eine Auswerte- und Steuereinheit 19 vorgesehen, die das Schaltelement 17 in geeigneter Weise zur Erzielung eines vorgegebenen gewünschten Dämpfungsverhaltens pulsweitenmoduliert schaltet. Infolge der Pulsweitenmodulation ist das Schaltelement 17 wechselweise für eine bestimmte Pulsdauer geschlossen und für eine bestimmte Pulspausendauer geöffnet. Durch das variable Verhältnis zwischen der Pulsdauer und der Pulspausendauer wird dann ein mittlerer Stromfluss durch den Bremsstromkreis 15 erreicht, der eine bestimmte Dämpfung des Türflügels bewirkt.

Das Schalten des Schaltelements 17 mittels der Auswerte- und Steuereinheit 19 ist in der Figur durch den Pfeil symbolisiert, der die Auswerte- und Steuereinheit 19 mit dem Schaltelement 17 verbindet. In der gezeigten Ausführungsform ist die Auswerte- und Steuereinheit 19 als Mikrocontroller ausgebildet. Neben den dargestellten Elementen kann die Auswerte- und Steuereinheit 19 auch noch mit weiteren Elementen verbunden sein, beispielsweise um darüber eine Geschwindigkeit und/oder eine Bewegungsrichtung des Türflügels zu erfassen, so dass eine richtungsabhängige Dämpfung und/oder allgemein eine Regelung der Dämpfung unter Berücksichtigung externer Parameter möglich wird.

Zum Schutz vor einer übermäßigen Belastung der Bremsvorrichtung 11 und/oder einer die Bremsvorrichtung 11 mit dem Türflügel verbindenden Mechanik weist die Bremsvorrichtung 11 eine Schutzvorrichtung 21 auf. Diese Schutzvorrichtung 21 umfasst einen Stromsensor 23, der im Bremsstromkreis 15 angeordnet ist. Zum Erfassen einer Stromstärke in dem Bremsstromkreis 15 weist der Stromsensor 23 einen Hall-Sensor auf, der es ermöglicht, die Stromstärke in dem Bremsstromkreis 15 zu erfassen, ohne dadurch die Funktion des Bremsstromkreises zu beeinträchtigen.

Die von dem Stromsensor 23 erfasste Stromstärke wird von dem Stromsensor 23 als ein Lastsignal in Form eines der erfassten Stromstärke entsprechenden, insbesondere zu der erfassten Stromstärke proportionalen, Messwerts an die Auswerte- und Steuereinheit 19 ausgegeben. Die Ausgabe des Messwerts an die Auswerte- und Steuereinheit 19 erfolgt dabei über einen Verstärker 25, der das Lastsignal an eine Eingangsempfindlichkeit der Auswerte- und Steuereinheit 19 anpasst.

Auf diese Weise kann die Auswerte- und Steuereinheit 19 die erfasste Stromstärke bei der Ansteuerung des Schaltelements 17 berücksichtigen. Insbesondere vergleicht die Auswerte- und Steuereinheit 19 die erfasste Stromstärke mit einer Überlaststromstärke, die der Auswerte- und Steuereinheit 19 vorgegeben werden kann und in der Auswerte- und Steuereinheit 19 gespeichert ist. Erreicht die erfasste Stromstärke die Überlaststromstärke oder überschreitet sie diese, dann schaltet die Auswerte- und Steuereinheit 19 das Schaltelement 17 derart, dass dadurch die Stromstärke in dem Bremsstromkreis 15 reduziert wird und somit eine Reduzierung der Dämpfung des Türflügels erfolgt. Zu diesem Zweck passt die Auswerte- und Steuereinheit 19 die Pulsweitenmodulation derart an, dass die Stromstärke im Bremsstromkreis auf einen Wert unterhalb der Überlaststromstärke fällt. So werden die Bremsvorrichtung 11 und die Mechanik zwischen der Bremsvorrichtung 11 und dem Türflügel vor übermäßiger Belastung geschützt.

Bei dieser Ausführungsform ist die Auswerte- und Steuereinheit 19, die ohnehin zur Realisierung eines gewünschten Dämpfungsverhaltens mittels Pulsweitenmodulation in der Bremsvorrichtung 11 vorgesehen ist, zugleich ein funktionaler Teil der Schutzvorrichtung 21. Der Signalverlauf durch diese Schutzvorrichtung 21, die neben der Auswerte- und Steuereinheit 19 auch den Stromsensor 23 sowie den Verstärker 25 umfasst, ist in der Figur durch unterbrochene Linien dargestellt.

Die Figur zeigt aber zugleich eine alternative Ausführungsform, die mit der vorstehend beschriebenen Ausführungsform überlagert dargestellt ist und deren Signalverlauf durch eine punktierte Linie dargestellt ist. Die Schutzvorrichtung 21' dieser alternativen Ausführungsform umfasst lediglich den Stromsensor 23, der bei dieser Ausführungsform dazu ausgebildet, die erfasste Stromstärke mit der vorgegebenen oder vorgebbaren Überlaststromstärke zu vergleichen. Die Überlaststromstärke kann zu diesem Zweck als Parametrierung in dem Stromsensor 23 gespeichert und insbesondere von außen veränderbar sein. Für den Vergleich der erfassten Stromstärke mit der Überlaststromstärke kann der Stromsensor 23 beispielsweise zusätzlich zu einem Hall-Sensor einen Komparator umfassen.

Bei einer solchen Schutzvorrichtung 21' kann der Stromsensor 23 das Schaltelement 17 wie dargestellt direkt ansteuern, was in der Figur durch den den Stromsensor 23 mit dem Schaltelement 17 verbindenden Pfeil symbolisiert ist. Insbesondere kann der Stromsensor 23 in diesem Fall dazu ausgebildet sein, das Schaltelement 17 zu öffnen, wenn die erfasste Stromstärke die Überlaststromstärke erreicht oder überschreitet. Ein Erreichen oder Überschreiten der Überlaststromstärke führt dann also zu einer vollständigen Unterbrechung des Stromflusses in dem Bremsstromkreis, so dass die Dämpfung des Türflügels ausgesetzt wird. Bei dieser Ausführungsform wird also lediglich unterschieden, ob eine Überbelastung droht oder nicht, und der Bremsstromkreis gegebenenfalls einfach unterbrochen.

Während also eine Schutzvorrichtung 21, bei der ein kontinuierlich variables Lastsignal an die Auswerte- und Steuereinheit 19 ausgegeben und dann eine Pulsweitenmodulation der Schaltelements 17 in Abhängigkeit von dem Lastsignal angepasst wird, die Dämpfung im Überlastfall zumindest reduziert aufrechterhalten kann, ist bei der alternativen Schutzvorrichtung 21', deren Stromsensor 23 lediglich zwischen dem Vorliegen und dem Nicht-Vorliegen einer Überlast unterscheidet und direkt das Schaltelement 17 dementsprechend öffnet bzw. schließt, keine derart flexible Anpassung der Dämpfung möglich. Allerdings weist diese alternative Ausführungsform dafür den Vorteil eines einfacheren Aufbaus auf. Dabei ist beiden Ausführungsformen gemein, dass sie jeweils die Sicherheit der Bremsvorrichtung 11 verbessern, da jeweils auf eine drohende Überbelastung in einer Weise reagiert wird, durch die eine Beschädigung der Bremsvorrichtung 11 und/oder einer zwischen der Bremsvorrichtung 11 und dem Türflügel wirkenden Mechanik infolge einer Überbelastung durch eine Reduzierung der Stromstärke im Bremsstromkreis verhindert werden kann.

### Bezugszeichen

- 11: Bremsvorrichtung
- 13: Elektromotor
- 15: Bremsstromkreis
- 17: Schaltelement
- 19: Auswerte- und Steuereinheit
- 21, 21': Schutzvorrichtung
- 23: Stromsensor
- 25: Verstärker

## Patentansprüche

1. Bremsvorrichtung (11) für einen beweglichen Türflügel, die einen als Generator betriebenen Elektromotor (13) umfasst, dessen Motorwelle durch eine Bewegung des Türflügels drehbar ist und der eine bewegungsabhängige Motorspannung ausgibt, und die einen Bremsstromkreis (15) umfasst, an den die Motorspannung angelegt oder anlegbar ist und über den der Elektromotor (13) kurzschließbar ist, um eine Bewegung des Türflügels zu dämpfen, wobei die Bremsvorrichtung (11) eine Schutzvorrichtung (21) mit einem Stromsensor (23) umfasst, der dazu ausgebildet ist, eine von dem Elektromotor (13) erzeugte Stromstärke zu erfassen,
**dadurch gekennzeichnet, dass**
die Schutzvorrichtung (21) dazu ausgebildet ist, den Bremsstromkreis (15) in Abhängigkeit von der erfassten Stromstärke derart zu modifizieren, dass bei einem Erreichen oder Überschreiten einer vorgegebenen oder vorgebbaren Überlaststromstärke die Stromstärke in dem Bremsstromkreis (15) reduziert wird,
die Bremsvorrichtung (11) eine Auswerte- und Steuereinheit (19) umfasst,
der Bremsstromkreis (15) ein mittels der Auswerte- und Steuereinheit (19) schaltbares Schaltelement (17) umfasst, über das der Elektromotor (13) je nach Schaltzustand des Schaltelements (17) kurzgeschlossen ist,
der Stromsensor (23) dazu ausgebildet ist, ein von der erfassten Stromstärke abhängiges Lastsignal an die Auswerte- und Steuereinheit (19) auszugeben, und
die Auswerte- und Steuereinheit (19) dazu ausgebildet ist, das Schaltelement (17) in Abhängigkeit von dem Lastsignal derart zu schalten, dass dadurch die Stromstärke in dem Bremsstromkreis (15) reduziert wird.

2. Bremsvorrichtung nach Anspruch 1,
**dadurch gekennzeichnet,**
**dass** der Stromsensor (23) dazu ausgebildet ist, die Stromstärke in dem Bremsstromkreis (15) zu erfassen.

3. Bremsvorrichtung nach Anspruch 1 oder 2,
**dadurch gekennzeichnet,**
**dass** die Schutzvorrichtung (21) dazu ausgebildet ist, den Bremsstromkreis (15) in Abhängigkeit von der erfassten Stromstärke derart zu modifizieren, dass bei einem Erreichen oder Überschreiten der Überlaststromstärke der Stromfluss in dem Bremsstromkreis (15) unterbrochen wird.

4. Bremsvorrichtung nach zumindest einem der vorstehenden Ansprüche,
**dadurch gekennzeichnet,**
**dass** der Stromsensor (23) insofern rückwirkungsfrei ausgebildet ist, als die Stromstärke in dem Bremsstromkreis (15) durch das Erfassen der Stromstärke mittels des Stromsensors (23) nicht beeinträchtigt wird.

5. Bremsvorrichtung nach zumindest einem der vorstehenden Ansprüche,
**dadurch gekennzeichnet,**
**dass** der Stromsensor (23) einen Hall-Sensor umfasst.

6. Bremsvorrichtung nach Anspruch 1,
**dadurch gekennzeichnet,**
**dass** die Auswerte- und Steuereinheit (19) dazu ausgebildet ist, das Schaltelement (17), wenn die dem Lastsignal zugrundliegende erfasste Stromstärke die Überlaststromstärke erreicht oder überschreitet, derart zu schalten, dass der Stromfluss in dem Bremsstromkreis (15) unterbrochen wird.

7. Bremsvorrichtung nach Anspruch 1,
**dadurch gekennzeichnet,**
**dass** die Auswerte- und Steuereinheit (19) dazu ausgebildet ist, das Schaltelement (17), wenn die dem Lastsignal zugrundliegende erfasste Stromstärke die Überlaststromstärke erreicht oder überschreitet, derart zu schalten, dass dadurch die Stromstärke in dem Bremsstromkreis (15), vorzugsweise mittels Pulsweitenmodulation, auf eine Maximalstromstärke, insbesondere auf die Überlaststromstärke, begrenzt wird.

8. Bremsvorrichtung nach zumindest einem der Ansprüche 1 bis 7,
**dadurch gekennzeichnet,**
**dass** der Stromsensor (23) dazu ausgebildet ist, als das genannte Lastsignal einen zu der erfassten Stromstärke proportionalen Wert an die Auswerte- und Steuereinheit (19) auszugeben.

9. Bremsvorrichtung nach zumindest einem der Ansprüche 1 bis 7,
**dadurch gekennzeichnet,**
**dass** der Stromsensor (23) dazu ausgebildet ist, die erfasste Stromstärke mit der Überlaststromstärke zu vergleichen und als das genannte Lastsignal ein bestimmtes Überlastsignal auszugeben, wenn die erfasste Stromstärke die Überlaststromstärke erreicht oder überschritten hat, und andernfalls ein bestimmtes Normalsignal auszugeben.

10. Bremsvorrichtung nach zumindest einem der vorstehenden Ansprüche,
**dadurch gekennzeichnet,**
**dass** die Überlaststromstärke einstellbar ist.

11. Bremsvorrichtung nach zumindest einem der vorstehenden Ansprüche,
**dadurch gekennzeichnet,**
**dass** der Elektromotor (13) als bürstenloser Elektromotor mit mehreren Statorspulen ausgebildet ist, in denen jeweils in Abhängigkeit von der Bewegung des Türflügels eine Wechselspannung induziert wird,
**dass** der Elektromotor (13) zumindest ein Kontaktpaar aufweist, an dem er eine der in den Statorspulen induzierten Wechselspannungen ausgibt, dass der Bremsstromkreis (15) einen Teilbremsstromkreis umfasst, an den die an dem Kontaktpaar ausgegebene Wechselspannung angelegt oder anlegbar ist und über den das Kontaktpaar kurzschließbar ist,
und **dass** die Schutzvorrichtung (21) dazu ausgebildet ist, den Teilbremsstromkreis in Abhängigkeit von der erfassten Stromstärke derart zu modifizieren, dass bei einem Erreichen oder Überschreiten der Überlaststromstärke die Stromstärke in dem Teilbremsstromkreis reduziert wird.

12. Bremsvorrichtung nach Anspruch 11,
**dadurch gekennzeichnet,**
**dass** der Elektromotor (13) mehrere Kontaktpaare, insbesondere für jede Statorspule jeweils ein Kontaktpaar, aufweist, an denen er jeweils eine andere der in den Statorspulen induzierten Wechselspannungen ausgibt, dass der Bremsstromkreis (15) mehrere Teilbremsstromkreise umfasst, an denen jeweils eine andere der an den Kontaktpaaren ausgegebenen Wechselspannungen angelegt oder anlegbar ist und über den das jeweilige Kontaktpaar kurzschließbar ist,
und **dass** die Schutzvorrichtung (21) dazu ausgebildet ist, die Teilbremsstromkreise in Abhängigkeit von der erfassten Stromstärke derart zu modifizieren, dass bei einem Erreichen oder Überschreiten der Überlaststromstärke die Stromstärke in allen Teilbremsstromkreisen reduziert wird.

13. Bremsvorrichtung nach Anspruch 11 oder 12,
**dadurch gekennzeichnet,**
**dass** der Stromsensor (23) dazu ausgebildet ist, die Stromstärke in dem Teilbremsstromkreis oder in zumindest einem Teilbremsstromkreis, insbesondere in allen Teilbremsstromkreisen, des Bremsstromkreises (15) zu erfassen.

## Claims

1. Braking device (11) for a movable door leaf, comprising an electric motor (13) which is operated as a generator, the motor shaft of which can be rotated by a movement of the door leaf and which outputs a movement-dependent motor voltage, and comprising a braking circuit (15), to which the motor voltage is applied or can be applied and via which the electric motor (13) can be short-circuited in order to dampen a movement of the door leaf, wherein the braking device (11) comprises a protective device (21) with a current sensor (23) which is designed to capture a current intensity generated by the electric motor (13),
**characterized in that**
the protective device (21) is designed to modify the braking circuit (15) on the basis of the captured current intensity in such a way that, when a predefined or predefinable overload current intensity is reached or exceeded, the current intensity in the braking circuit (15) is reduced;
the braking device (11) comprises an evaluation and control unit (19),
the braking circuit (15) comprises a switching element (17) which can be switched by means of the evaluation and control unit (19) and via which the electric motor (13) is short-circuited depending on the switching state of the switching element (17),
the current sensor (23) is designed to output a load signal, which is dependent on the captured current intensity, to the evaluation and control unit (19), and the evaluation and control unit (19) is designed to switch the switching element (17) on the basis of the load signal in such a way that the current intensity in the braking circuit (15) is reduced thereby.

2. Braking device according to Claim 1,
**characterized**
**in that** the current sensor (23) is designed to capture the current intensity in the braking circuit (15).

3. Braking device according to Claim 1 or 2,
**characterized**
**in that** the protective device (21) is designed to modify the braking circuit (15) on the basis of the captured current intensity in such a way that, when the overload current intensity is reached or exceeded, the current flow in the braking circuit (15) is interrupted.

4. Braking device according to at least one of the preceding claims,
**characterized**
**in that** the current sensor (23) is designed to be free of reaction in so far as the current intensity in the braking circuit (15) is not affected by the capture of the current intensity by means of the current sensor (23).

5. Braking device according to at least one of the preceding claims,
**characterized**
**in that** the current sensor (23) comprises a Hall sensor.

6. Braking device according to Claim 1,
**characterized**
**in that** the evaluation and control unit (19) is designed to switch the switching element (17), when the captured current intensity underlying the load signal reaches or exceeds the overload current intensity, in such a way that the current flow in the braking circuit (15) is interrupted.

7. Braking device according to Claim 1,
**characterized**
**in that** the evaluation and control unit (19) is designed to switch the switching element (17), when the captured current intensity underlying the load signal reaches or exceeds the overload current intensity, in such a way that the current intensity in the braking circuit (15) is thereby limited to a maximum current intensity, in particular to the overload current intensity, preferably by means of pulse width modulation.

8. Braking device according to at least one of Claims 1 to 7,
**characterized**
**in that** the current sensor (23) is designed to output a value proportional to the captured current intensity to the evaluation and control unit (19) as said load signal.

9. Braking device according to at least one of Claims 1 to 7,
**characterized**
**in that** the current sensor (23) is designed to compare the captured current intensity with the overload current intensity and to output a specific overload signal as said load signal when the captured current intensity has reached or exceeded the overload current intensity, and otherwise to output a specific normal signal.

10. Braking device according to at least one of the preceding claims,
**characterized**
**in that** the overload current intensity is adjustable.

11. Braking device according to at least one of the preceding claims,
**characterized**
**in that** the electric motor (13) is designed as a brushless electric motor with a plurality of stator coils, in each of which an AC voltage is induced on the basis of the movement of the door leaf,
**in that** the electric motor (13) has at least one contact pair at which it outputs one of the AC voltages induced in the stator coils, in that the braking circuit (15) comprises a partial braking circuit, to which the AC voltage output at the contact pair is applied or can be applied and via which the contact pair can be short-circuited,
and **in that** the protective device (21) is designed to modify the partial braking circuit on the basis of the captured current intensity in such a way that, when the overload current intensity is reached or exceeded, the current intensity in the partial braking circuit is reduced.

12. Braking device according to Claim 11,
**characterized**
**in that** the electric motor (13) has a plurality of contact pairs, in particular in each case one contact pair for each stator coil, at which it outputs in each case another of the AC voltages induced in the stator coils, in that the braking circuit (15) comprises a plurality of partial braking circuits, to each of which another of the AC voltages output at the contact pairs is applied or can be applied and via which the respective contact pair can be short-circuited,
and **in that** the protective device (21) is designed to modify the partial braking circuits on the basis of the captured current intensity in such a way that, when the overload current intensity is reached or exceeded, the current intensity in all partial braking circuits is reduced.

13. Braking device according to Claim 11 or 12,
**characterized**
**in that** the current sensor (23) is designed to capture the current intensity in the partial braking circuit or in at least one partial braking circuit, in particular in all partial braking circuits, of the braking circuit (15).

## Revendications

1. Dispositif de freinage (11) destiné à un battant de porte mobile, qui comprend un moteur électrique (13) utilisé comme générateur, dont l'arbre moteur peut être entraîné en rotation par un mouvement du battant de porte et qui délivre une tension de moteur dépendant du mouvement, et qui comprend un circuit électrique de freinage (15) auquel la tension de moteur est appliquée ou peut être appliquée et par l'intermédiaire duquel le moteur électrique (13) peut être court-circuité afin d'amortir un mouvement du battant de porte, le dispositif de freinage (11) comprenant un dispositif de protection (21) doté d'un capteur de courant (23) qui est conçu pour détecter une intensité de courant générée par le moteur électrique (13),
**caractérisé en ce que**
le dispositif de protection (21) est conçu pour modifier le circuit électrique de freinage (15) en fonction de l'intensité de courant détectée de telle sorte que, lorsqu'une intensité de courant de surcharge prédéfinie ou prédéfinissable est atteinte ou dépassée, l'intensité de courant dans le circuit électrique de freinage (15) soit réduite ;
le dispositif de freinage (11) comprend une unité d'évaluation et de commande (19),
le circuit électrique de freinage (15) comprend un élément de commutation (17) pouvant être commuté au moyen de l'unité d'évaluation et de commande (19), par l'intermédiaire duquel le moteur électrique (13) est court-circuité conformément à l'état de commutation de l'élément de commutation (17),
le capteur de courant (23) est conçu pour délivrer à l'unité d'évaluation et de commande (19) un signal de charge dépendant de l'intensité de courant détectée, et l'unité d'évaluation et de commande (19) est conçue pour commuter l'élément de commutation (17) en fonction du signal de charge de telle sorte que l'intensité de courant dans le circuit électrique de freinage (15) soit ainsi réduite.

2. Dispositif de freinage selon la revendication 1, **caractérisé en ce que**
le capteur de courant (23) est conçu pour détecter l'intensité de courant dans le circuit électrique de freinage (15).

3. Dispositif de freinage selon la revendication 1 ou 2,
**caractérisé en ce que**
le dispositif de protection (21) est conçu pour modifier le circuit électrique de freinage (15) en fonction de l'intensité de courant détectée de telle sorte que, lorsqu'une intensité de courant de surcharge est atteinte ou dépassée, le flux de courant dans le circuit électrique de freinage (15) soit interrompu.

4. Dispositif de freinage selon au moins l'une des revendications précédentes,
**caractérisé en ce que**
le capteur de courant (23) est conçu sans rétroaction dans la mesure où l'intensité de courant dans le circuit électrique de freinage (15) n'est pas affectée par la détection de l'intensité de courant au moyen du capteur de courant (23).

5. Dispositif de freinage selon au moins l'une des revendications précédentes,
**caractérisé en ce que**
le capteur de courant (23) comprend un capteur à effet Hall.

6. Dispositif de freinage selon la revendication 1,
**caractérisé en ce que**
l'unité d'évaluation et de commande (19) est conçue pour commuter l'élément de commutation (17) lorsque l'intensité de courant détectée sur laquelle est basé le signal de charge atteint ou dépasse l'intensité de courant de surcharge, de telle sorte que le flux de courant dans le circuit électrique de freinage (15) soit interrompu.

7. Dispositif de freinage selon la revendication 1,
**caractérisé en ce que**
l'unité d'évaluation et de commande (19) est conçue pour commuter l'élément de commutation (17) lorsque l'intensité de courant détectée correspondant au signal de charge atteint ou dépasse l'intensité de courant de surcharge, de telle sorte que l'intensité de courant dans le circuit électrique de freinage (15) soit ainsi limitée, de préférence au moyen d'une modulation de largeur d'impulsion, à une intensité de courant maximale, en particulier à l'intensité de courant de surcharge.

8. Dispositif de freinage selon l'une quelconque des revendications 1 à 7,
**caractérisé en ce que**
le capteur de courant (23) est conçu pour délivrer à l'unité d'évaluation et de commande (19), en tant que ledit signal de charge, une valeur proportionnelle à l'intensité de courant détectée.

9. Dispositif de freinage selon l'une quelconque des revendications 1 à 7,
**caractérisé en ce que**
le capteur de courant (23) est conçu pour comparer l'intensité de courant détectée à l'intensité de courant de surcharge et pour délivrer, en tant que ledit signal de charge, un signal de surcharge déterminé lorsque l'intensité de courant détectée a atteint ou dépassé l'intensité de courant de surcharge, et dans le cas contraire, pour délivrer un signal normal déterminé.

10. Dispositif de freinage selon au moins l'une des revendications précédentes,
**caractérisé en ce que**
l'intensité de courant de surcharge est réglable.

11. Dispositif de freinage selon au moins l'une des revendications précédentes,
**caractérisé en ce que**
le moteur électrique (13) est conçu sous la forme d'un moteur électrique sans balai comprenant plusieurs bobines de stator dans lesquelles une tension alternative est respectivement induite en fonction du mouvement du battant de porte,
**en ce que** le moteur électrique (13) comporte au moins une paire de contacts à laquelle il délivre l'une des tensions alternatives induites dans les bobines de stator, **en ce que** le circuit électrique de freinage (15) comprend un circuit électrique de freinage partiel auquel la tension alternative délivrée à la paire de contacts est ou peut être appliquée et par l'intermédiaire duquel la paire de contacts peut être court-circuitée,
et **en ce que** le dispositif de protection (21) est conçu pour modifier le circuit électrique de freinage partiel en fonction de l'intensité de courant détectée de telle sorte que, lorsqu'une intensité de courant de surcharge est atteinte ou dépassée, l'intensité de courant dans le circuit électrique de freinage partiel soit réduit.

12. Dispositif de freinage selon la revendication 11, **caractérisé en ce que**
le moteur électrique (13) comporte plusieurs paires de contacts, en particulier une paire de contacts respective pour chaque bobine de stator, auxquelles il délivre respectivement une autre des tensions alternatives induites dans les bobines de stator, **en ce que** le circuit électrique de freinage (15) comprend plusieurs circuits électriques de freinage partiels, auxquels une autre des tensions alternatives délivrées en sortie aux paires de contacts est ou peut être respectivement appliquée et par l'intermédiaire duquel la paire de contacts respective peut être court-circuitée,
et **en ce que** le dispositif de protection (21) est conçu pour modifier les circuits de freinage partiels en fonction de l'intensité de courant détectée de telle sorte que, lorsque l'intensité de courant de surcharge est atteinte ou dépassée, l'intensité de courant soit réduite dans tous les circuits de freinage partiels.

13. Dispositif de freinage selon la revendication 11 ou 12,
**caractérisé en ce que**
le capteur de courant (23) est conçu pour détecter l'intensité de courant dans le circuit électrique de freinage partiel ou dans au moins un circuit électrique de freinage partiel, en particulier dans tous les circuits électriques de freinage partiels, du circuit électrique de freinage (15).
